## Europäisches Patentamt
## European Patent Office
## Office européen des brevets

(19)

(11) Veröffentlichungsnummer : **0 193 237**
**B1**

(12) **EUROPÄISCHE PATENTSCHRIFT**

(45) Veröffentlichungstag der Patentschrift :
**17.05.89**

(51) Int. Cl.⁴ : **H 01 G   9/24**

(21) Anmeldenummer : **86200248.2**

(22) Anmeldetag : **19.02.86**

(54) Verfahren zum Herstellen eines elektrolytischen Wickelkondensators.

(30) Priorität : **20.02.85 NL 8500473**

(43) Veröffentlichungstag der Anmeldung :
**03.09.86 Patentblatt 86/36**

(45) Bekanntmachung des Hinweises auf die Patenterteilung : **17.05.89 Patentblatt 89/20**

(84) Benannte Vertragsstaaten :
**BE CH DE FR GB IT LI SE**

(56) Entgegenhaltungen :
**DE–A– 2 257 991**
**DE–C–   898 481**
**DE–C–   936 467**
**GB–A–   507 242**
**US–A– 2 774 018**

(73) Patentinhaber : **N.V. Philips' Gloeilampenfabrieken**
**Groenewoudseweg 1**
**NL-5621 BA Eindhoven (NL)**

(72) Erfinder : **Oosthoek, Willem Hendrik**
**INT. OCTROOIBUREAU B.V. Prof. Holstlaan 6**
**NL-5656 AA Eindhoven (NL)**
Erfinder : **Spang, Martinus Antonius**
**INT. OCTROOIBUREAU B.V. Prof. Holstlaan 6**
**NL-5656 AA Eindhoven (NL)**

(74) Vertreter : **Auwerda, Cornelis Petrus et al**
**INTERNATIONAAL OCTROOIBUREAU B.V. Prof. Holstlaan 6**
**NL-5656 AA Eindhoven (NL)**

## Beschreibung

Die Erfindung bezieht sich auf ein Verfahren zum Herstellen eines elektrolytischen Wickelkondensators und auf den dadurch erhaltenen Elektrolytkondensator.

Kondensatoren dieser Art gibt es in zwei Ausführungsformen, und zwar einen nassen Wickelkondensator, wobei der Wickel mit einer flüssigen Elektrolytlösung imprägniert ist, und einen trockenen Wickelkondensator, wobei der Wickel mit einer festen Halbleiterverbindung imprägniert ist. Diese Halbleiterverbindung, in der Praxis Braunstein, $MnO_2$, wird dadurch angebracht, dass der Wickel mit einer Lösung eines Salzes der Halbleiterverbindung, in der Praxis Mangannitrat, $Mn(No_3)_2$, imprägniert und danach auf eine derart hohe Temperatur erhitzt wird, dass das $Mn(NO_3)_2$ durch Pyrolyse in $MnO_2$ umgewandelt wird. Der Wickel besteht aus einer Stapelung einer durch Formierung mit einer dielektrischen Oxidschicht versehenen Anodenfolie, einem Abstandshalter aus elektrisch nichtleitendem Material und einer meistens nicht formierten Kathodenfolie, die zusammen aufgewickelt werden. Sowohl die Anoden- als auch die Kathodenfolie bestehen meistens aus Aluminium.

Bei dem nassen Wickelkondensator besteht der Abstandshalter meistens aus Papier, beim trockenen Kondensator, wegen der erforderlichen Beständigkeit gegen Erhitzung bis zur Pyrolysetemperatur, aus Band aus Glasfasergewebe.

Während der verschiedenen Prozessschritte, die der Wickel erfährt, wie dem Imprägnieren, gegebenenfalls dem Erhitzen zur Pyrolyse der imprägnierten Verbindung, dem Nachformieren und Einbauen in eine Umhüllung, und auch während dem Gebrauch des Kondensators selbst, muss der Wickel einwandfrei bleiben.

Dazu wird der Wickel an den Enden der den Wickel bildenden Folien geklebt, wie es aus der DE-OS 2257991 für nasse Elektrolytkondensatoren und aus US-PS 3566520 für trockene Kondensatoren bekannt ist. Unterschiedliche Klebstoffsorten, meistens von polymerer Art, werden dazu verwendet. Für den trockenen Elektrolytkondensator wird eine gegen hohe Temperaturen etwas besser beständige Klebstoffsorte verwendet, wobei der Grundgedanke ist, dass der Klebstoff auf jeden Fall seine Wirkung beibehalten soll, bis das gebildete Halbleiteroxid, der Braunstein, die Rolle des Heftmittels übernehmen kann. Die bisher verwendeten Klebstoffsorten weisen jedoch mehrere Nachteile auf. Sie sind in den nassen Kondensatoren oft nicht gegen die Elektrolytflüssigkeiten beständig und in den Trockenkondensatoren weisen sie den Nachteil auf, dass sie wegen ihres organischen Charakters bei Erhitzung Kohlenstofreste ergeben, die den Reihenwiderstand erhöhen können oder in manchen Fällen sogar einen Kurzschluss herbeiführen können oder dass sie sich zersetzen und dabei ihre Klebkraft verlieren, bevor der Braunstein ihre Wirkung übernehmen kann.

Nach der Erfindung ist das Verfahren zum Herstellen eines Elektrolytwickelkondensators dadurch gekennzeichnet, dass die Wickelenden mit einer Wasserglaslösung zusammengeklebt werden.

Durch die Wahl der Konzentration kann die Viskosität beliebig eingestellt werden.

Die Verwendung von Wasserglas bei der Herstellung eines Trockenwickelkondensators bewirkt, dass der Wickel während des ganzen Herstellungsvorganges einwandfrei bleibt und dass nach Erhitzung zur Pyrolyse keine Schadstoffe zurückbleiben, welche die Eigenschaften des Kondensators beeinträchtigen.

Auch für den nassen Wickelkondensator ist Wasserglas viel günstiger, weil es an unterschiedlichen Papierarten besser hattet.

Unter dem Ausdruck « Wasserglas » ist eine Natriumoder Kaliumsilikatlösung in Wasser zu verstehen, wobei das Verhältnis Alkalioxid/Siliziumdioxid unterschiedliche Werte aufweisen kann.

Auch ist es vorteilhaft, der Wasserglaslösung anorganische Füllstoffe hinzuzufügen, wie $SiO_2$ oder $Al_2O_3$ wodurch die Stärke der Verbindung vergrössert und die Viskosität der Lösung erhöht wird.

Die Lebensdauer der Lösung in dem Vorratsbehälter vor dem Anbringen, die sogenannte Topfzeit, wird allerdings durch Hinzufügung mancher Füllstoffe wesentlich verkürzt.

Die Lösung kann beispielsweise mit Hilfe eines Pinsels, eines Stempels, einer Rolle oder mittels einer Dosierpumpe am Ende des Bandes, das aus den beiden Elektrodenfolien mit dem Abstandshalter besteht, oder durch Eintauchen des Endes des Bandes in die Lösung angebracht werden.

Es sei bemerkt, dass Klebstoffe mit dieser Zusammensetzung zum Verbinden keramischer Teile von elektronischen Elementen beispielsweise aus Insulation/Circuits, Okt. 1981, Seiten 113-115 bekannt sind. Das Befestigen des Endes eines Wickels für einen Elektrolytkondensator wurde jedoch noch nicht vorgeschlagen.

Beispiel 1

Wickel eines Trockenelektrolytkondensators mit Glasband als Abstandshalter wurden mit Hilfe einer Kaliumsilikatlösung, die umgerechnet 15,5 % $SiO_2$ enthielt, verklebt, danach 15 Minuten an der Luft und danach einige Minuten in einem Ofen bei 100 °C getrocknet. Der Wickel wurde 90 Minuten lang in einer wässrigen Lösung von 30 °C nachformiert und 30 Minuten lang bei 100 °C in einem Ofen getrocknet. Danach wurde der Wickel in eine 60 %ige Lösung von Mangannitrat von 50 °C getaucht, ≤ 3 Minuten in einem Ofen bei 500 °C erhitzt und nachformiert. Diese Reihe der letzten drei Behandlungen wurde dreimal wiederholt.

Die auf diese Weise erhaltenen Wickel verhielten sich gut. Sie wurden dadurch getestet, dass die Wickel 10 Minuten lang in einer Menge entmineralisierten Wassers von 35 ml je Wickel gekocht wurden und die Leitfähigkeit des wässrigen Extraktes gemessen wurde. Eine Messung an einem nicht verklebten Wickel ergab eine Leitfähigkeit von $0,3 \times 10^{-6}$ Ohm$^{-1}$cm$^{-1}$ und eine Messung an einem wie obenstehend behandelten Wickel $1,8 \times 10^{-6}$ Ohm$^{-1}$cm$^{-1}$.

Zum vergleich wurden identische Wickel auf bekannte Weise mit einer Polystyrollösung verklebt. Nach Pyrolyse zeigten 20 bis 50 % der Wickel ein Lockern der letzten Windung bzw. der letzten Windungen. Dadurch wurden die Wickel bei fortgesetzter Behandlung unnötig dick. Ausserdem wurde der elektrische Widerstand um einen Faktor 1,5 bis 2 höher, und zwar durch eine unzureichende effektive Dichte des gebildeten Braunsteins in dem Wickel.

Beispiel 2

Wickel für einen nassen Elektrolytkondensator mit Papier als Abstandshalter wurden mit einer Lösung verklebt, die 70 g Kaliumsilikatlösung mit einem Gehalt von 23 Gew.% und 7 g Aluminiumoxid mit einem Gesamtwert an Verunreinigungen < 200 ppm und mit einer spezifischen Oberfläche von $12 \pm 1$ m$^2$/g enthielt.

Dieser anorganische Klebstoff hatte eine Topfzeit von 96 Stunden ; das niedergeschlagene $Al_2O_3$ wurde nach Rühren wieder dispergiert.

Der Abstandshalter war mit einer Elektrolytflüssigkeit, die Dimethylformamid und Ammoniumpentaborat enthielt, imprägniert. Nach dem Anbringen des Klebstoffes wurde kurz an der Luft getrocknet. Auch diese Wickel blieben während des ganzen Herstellungsverfahrens einwandfrei.

## Patentansprüche

1. Verfahren zum Herstellen eines elektrolytischen Wickelkondensators mit einem Wickel, der aus einem zusammengerollten Gefüge einer formierten Anodenfolie, einem Abstandshalter und einer Kathodenfolie besteht, wobei die Wickelenden zusammengeklebt werden und der Wickel mit Elektrolytflüssigkeit, gegebenenfalls mit nachfolgender Erhitzung für eine pyrolytische Umwandlung der Elektrolytflüssigkeit zu einem festen Halbleiteroxid, imprägniert wird, dadurch gekennzeichnet, dass die Wickelenden mit einer Wasserglaslösung zusammengeklebt werden.

2. Verfahren nach Anspruch 1, dadurch gekennzeichnet, dass der Wasserglaslösung anorganische Füllstoffe hinzugefügt werden.

3. Elektrolytischer Wickelkondensator, der nach einem der vorstehenden Ansprüche hergestellt worden ist.

## Claims

1. A method for the manufacture of a wound electrolytic foil capacitor comprising a foil which is composed of a wound assembly of a formed anode foil, a separator and a cathode foil, the ends of which are stuck together and the wound foil is impregnated with an electrolyte liquid, whether or not followed by a heating process to obtain a pyrolytic conversion of the electrolyte liquid into a solid semiconductive oxide, characterized in that the ends of the foils are stuck together using a waterglass solution.

2. A method as claimed in Claim 1, characterized in that inorganic fillers are added to the waterglass solution.

3. A wound electrolytic foil capacitor, manufactured in accordance with any one of the preceding Claims.

## Revendications

1. Procédé pour la fabrication d'un condensateur électrolytique bobiné avec une bande à bobiner constituée par une structure enroulée d'une feuille anodique formée, d'un élément d'écartement et d'une feuille cathodique, selon lequel les extrémités de la bande à bobiner sont collées ensemble et la bande à bobiner est imprégnée d'un liquide d'électrolyte, le cas échéant suivi d'un chauffage pour une transformation pyrolytique du liquide d'électrolyte en un oxyde semi-conducteur solide, caractérisé en ce que les extrémités de la bande à bobiner sont réunies par collage avec une solution de verre soluble.

2. Procédé selon la revendication 1, caractérisé en ce que la solution de verre soluble est additionnée de substances de remplissage inorganiques.

3. Condensateur électrolytique bobiné réalisé selon l'une des revendications précédentes.